# EUROPEAN PATENT APPLICATION

(11) **EP 4 582 236 A1**
(43) Date of publication of application: **09.07.2025**
(21) Application number: 24150066.9
(22) Date of filing: 02.01.2024

(54) **METHOD FOR POSITIONING A PREFORM COMPONENT FOR MANUFACTURING A WIND TURBINE BLADE OR A PREFORM ELEMENT FOR A WIND TURBINE BLADE ON A MOLD SURFACE OF A MOLD AND MOLD ARRANGEMENT WITH A MOLD AND A LIFTING ARRANGEMENT**

(71) Applicant: Siemens Gamesa Renewable Energy A/S, 7330 Brande (DK)
(72) Inventor: Mogens, Nielsen, 9220 Aalborg (DK)
(74) Representative: SGRE-Association

(57) **Abstract**

Method for positioning at least one preform component (4) on a mold surface (3) of a mold (2), wherein the preform component (4) is adapted to be used for manufacturing a wind turbine blade or a preform element for a wind turbine blade, wherein the method comprises the following steps:
- providing a lifting arrangement (5), comprising a carrying structure (6) and at least one positioning device (19) arranged thereon, wherein the positioning device (19) comprises at least one gripping device (31) and at least one user handling means (37),
- moving the positioning device (19) such that the gripping device (31) is brought in contact with the preform component (4),
- gripping the preform component (4) by the gripping device (31),
- moving the positioning device (19) such that the preform component (4) is brought to a designated position on the mold surface (3), wherein the movement of the positioning device (19) is controlled by a manual operation of a user (38) on the user handling means (37), and
- releasing the preform component (4) from the gripping device (31).

## Description

The present invention relates to a method for positioning at least one preform component on a mold surface of a mold, wherein the preform component is adapted to be used for manufacturing a wind turbine blade or a preform element for a wind turbine blade.

One of the tasks regarding modern wind turbines for harvesting wind energy is the manufacturing process of the blades of wind turbines. These components can comprise lengths in the order of the several tens or even hundreds of meters. Particularly due to mechanical loads which typically act on wind turbine blades, there are high requirements regarding the mechanical properties of these components. To realize these requirements, wind turbine blades often consist of several layers, wherein these layers can comprise fibers, particularly fabrics, or can constitute core components made of stiff materials like plastics or balsa wood. These layers constitute so-called preform components. Typically, the preform components are arranged on a mold surface of a mold comprising a, particularly concave or convex, mold surface, wherein, subsequently, a binding agent of the preform components is activated to harden the respective layers and to adhere the layers with each other. The shape of the mold surface corresponds to the shape of the wind turbine blade to be produced. This approach allows the production of either the final wind turbine blade, e.g., an integral blade which is cast in one piece and made particularly from fiberglass-reinforced epoxy resin without any glued joints, or of a half shell of the final wind turbine blade or of a preform element. Preform elements constitute specific parts of the wind turbine blades to be produced and are typically arranged in a blade mold and adhered with each other, particularly by injecting resin into the respective mold cavity, to finish the final wind turbine blade.

One problem regarding the step of positioning the preform components on the mold surface arises from the fact that preform components typically comprise a heavy weight, for instance several kilograms, particularly between 3 and 8 kilograms, which makes it cumbersome for the respective users or workers to correctly arrange the preform components on the mold surface by hand. Another problem is that preform components often have to be arranged on a central region of the mold surface. To reach this region by hand, difficult postures of the workers are required. The weight of the respective preform components is limited by the physical strength of the user.

To overcome these problems, the usage of lifting devices for positioning preform components on mold surfaces has been suggested, i.e., in WO 2020 / 178 387 A1 or WO 2022 / 049 179 A1. However, since the positioning of the preform components on the mold surface has to be performed very accurately, the positioning of the preform components not by hand but by a lifting device is disadvantageous regarding this aspect.

Hence, it is an object of the present invention to provide an enhanced concept with respect to the process of positioning preform components on the mold surface, particularly regarding a simplification without getting disadvantages regarding the accuracy.

According to the present invention, this problem is solved by a method as initially described, wherein this method comprises the following steps:
- providing a lifting arrangement, comprising a carrying structure and at least one positioning device arranged thereon, wherein the positioning device comprises at least one gripping device and at least one user handling means
- moving the positioning device such that the gripping device is brought in contact with the preform component,
- gripping the preform component by the gripping device,
- moving the positioning device such that the preform component is brought to a designated position on the mold surface, wherein the movement of the positioning device is controlled by a manual operation of a user on the user handling means, and
- releasing the preform component from the gripping device.

The present invention is based on the idea that the lifting arrangement is used, on the one hand, to reduce the physical demand for the workers or users since the preform components are carried or held by the lifting arrangement while it is positioned on the mold surface. On the other hand, the user is present immediately on the location of the mold, since moving the positioning device is performed manually by the user handling means which is a component of the positioning device. Hence, the user can in situ perform corrections or adjustments regarding the correct positioning of the preform component on the mold surface.

Preferably, the user handling means is or comprises a handlebar, particularly adapted to be grasped on both axial or longitudinal ends. The handlebar can be similar to a handlebar of a bicycle, i.e., the handlebar can comprise one grip on each of its axial ends. The handlebar can be arranged, particularly immediately, adjacently to the gripping device on which the preform component is arranged. The user handling means can comprise an extension arm. One end of the extension arm can be arranged on a structural component of the user handling means, for instance to a component which carries the at least one gripping device, and the other end of the extension arm can be a free end which is provided to perform the manual operation. Preferably, the handlebar can be arranged on the free end of the extension arm. The handlebar causes the positive effect that even the central region of the mold surface can be reached easily.

The lifting arrangement comprises the carrying structure. The carrying structure can be connected with a wall and/or a ceiling of a building which constitutes the factory hall in which the preform elements and/or the wind turbine blades are manufactured. The carrying structure can be positioned or fixedly mounted on the ground. The carrying structure can be a frame. It can consist of a metal, particularly steel.

The positioning device is, at least partially, movable with respect to the carrying structure for transporting the preform component to the mold surface. The positioning device can comprise a longitudinal shape, wherein it has a fixed end arranged on the carrying structure and a free end. The gripping device can be arranged on the free end of the positioning device. The positioning device can consist of a metal, particularly steel.

Before the preform component is arranged on the mold surface, the lifting arrangement can be positioned on the mold or vice versa. The lifting arrangement is positioned such that a storing position of the preform component and the designated position on the mold surface lie within an operating range of the positioning device.

The positioning device is moved or brought into a position such that the gripping device gets in contact with the preform component. This means that the gripping device is positioned such that the preform component can be attached to the positioning device by the gripping device. More specifically, this can mean that a physical contact between the preform component and the gripping device occurs.

The gripping device is adapted to generate a releasable mechanical coupling between the preform component and the positioning device such that the positioning device and, hence, the gripping device can be moved together with the preform component attached thereon. The gripping device can be or can comprises a needle gripper and/or a vacuum gripper and/or a Bernoulli gripper and/or a vortex gripper. Needle grippers comprise at least one needle which can be moved out from and retracted into a, particularly block- or plate-like, supporting element. When being moved out from the supporting element, the at least one needle protrudes from its surface and penetrates the preform component arranged thereon. Hence, the preform component being positioned on the respective supporting element is held by the at least one needle in position. Several needles can be provided which can be arranged tilted to each other. In other words, several needles which can be moved out from the support plate into different directions can be provided. Vacuum grippers typically are or comprise a suction cup, therein a vacuum can be created between the vacuum gripper and the preform element, particularly by a vacuum pump, to hold the preform element in position. Bernoulli grippers and vortex grippers create an airflow between the gripper element and the preform element such that a holding force holding the preform element on the gripper element is created by the Bernoulli effect.

After the preform component has been gripped, it is brought to the designated position on the mold surface by the user. For this, the user performs the manual operation on the user handling means, which requires the immediate presence of the user on the positioning device. Once the preform component has reached the designated position, it is released from the gripping device and the positioning device can be moved away, particularly to the next preform component.

In a preferred embodiment, the lifting arrangement comprises a control device which generates control signals for at least one actuator of the positioning device, wherein the movement of the positioning device is caused and/or supported by the actuator. The control device and the actuator are connected by an electric cable connection which allows the transfer of the control signals to the actuator. The actuator can be an electric motor. The actuator can provide at least a biggest part of the forces required for moving the positioning device together with the preform component. The case that the movement is "caused" by the actuator means that the actuator generates the complete fore(s) required for moving the positioning means and the preform component. Alternatively, if the actuator "supports" the movement, at least a, preferably small, part of these force(s) are contributed by the user.

Preferably, the control device generates the control signals depending on handling signals, wherein at least one sensor is provided which generates the handling signals depending on a force which currently acts on the user handling means and which is caused by the manual operation. The user handling means can be or comprise a joystick. Alternatively, the user can directly guide, particularly pull or push, the positioning device and, hence, the preform component by the user handling means into the currently required direction, wherein the respective forces are sensed by the sensor. Dependent on the respective handling signals, the control signals are generated which cause an actuator-induced movement of the preform component into the respective position. In other words, the control signals are generated such that a direction of the movement of the positioning device caused by the actuator corresponds to the direction of the sensed force. The at least one gripping device can be equipped with a sensing means. The sensing means provides sensing signals which indicate the force of the gripping device which acts on the respective preform component. Using the sensing signals, the control signals can be generated such that this force does not exceed a force limit or, in other words. Hence, the gripping device is not pressed too hard into the preform component to prevent the respective material, e.g., the fiber material, from being damaged. Additionally, the mold surface is also prevented from being damaged because of the gripping device which is pressed too much to this surface.

Preferably, the lifting arrangement comprises at least two positioning devices being arranged on the carrying structure on positions spaced apart from each other, wherein each of the positioning devices is moved independently from the at least one other positioning device such that the gripping devices are brought to different positions on the preform component for gripping the preform component. All aspects which have been explained with respect to the positioning device above can be realized for each of the several positioning devices. Since the positioning devices can be moved independently from each other, each of these devices comprises a certain user handling means such that for each positioning device one user can perform the respective manual operations. Particularly if the preform component has an elongated shape, the process of positioning the preform component on the mold surface is simplified if it is attached to several positioning devices on different positions, while the manual operations are performed in parallel by several users. Most preferably, the positioning devices are moved such that the gripping devices are brought to positions on opposed ends of the preform component, wherein the preform component is gripped by the gripping devices on the opposed ends. This approach is particularly advantage for flexible preform components.

Particularly regarding this embodiment, the preform component which is brought to the designated position on the mold surface can be strip- or band like and can constitute a layer of the laminated preform element or wind turbine blade. The preform component can be a flexible fiber mat, particularly impregnated with a, preferably heat activatable, binding agent like a powder binder. The fibers can consist of plastic material or carbon. The preform components can be rigid core components of the preform element or wind turbine blade to be produced. The rigid preform component can consist of a plastic material or balsa wood.

Typically, to keep the weight of the single preform component as low as possible, the dimensions of the preform components are smaller than the dimensions of the preform element or wind turbine blade to be produced. Hence, preferably, several preform components can be positioned on the mold surface subsequently and along a longitudinal extent of the mold. To adhere laterally adjacent preform components with each other, adjacent preform components preferably overlap each other.

To further simplify the process of arranging the preform component(s) on the designated position(s), the lifting arrangement can comprise a holding structure, wherein a stack of several, particularly strip- or band like, preform components can be arranged on the holding structure. Having the preform component(s) arranged directly on the lifting arrangement or holding structure, respectively, the necessity that the lifting arrangement has to be brought to a respective storage location of the preform components each time after one of these components has been arranged on the designated position on the mold surface is avoided. The preform components can be brought from the holding structure to the designated positions on the mold surface subsequently. During this complete process, the lifting arrangement can remain positioned on the mold.

The holding structure can be or can comprise a, particularly horizontally arranged, holding plate on which the stack is arranged, the holding plate can be suspended on the carrying structure. Concretely, a yoke on which the holding plate is arranged can be connected with a rope which is, particularly rewindable, arranged on the carrying structure. A lifting means like an electric motor can be provided to lift and to lower the holding plate and, hence, the stack. Particularly if two positioning devices are provided, the holding structure can be arranged between the several positioning devices.

Particularly since wind turbine blades and, hence, respective molds typically comprise an elongated structure, the lifting arrangement can be moved along the longitudinal extent of the mold while the several preform components are positioned on the mold surface subsequently. The stack can comprise all preform components which are required and supposed to be located on the mold surface. The lifting arrangement can comprise at least one relocating means which allows relocating the lifting arrangement with respect to a ground or a stationary infrastructure component. The relocating means can be arranged on the carrying structure. The relocating means can be or can comprise at least one, preferrably lockable, wheel.

Furthermore, the present invention is related to a mold arrangement, comprising a mold with a mold surface, wherein at least one preform component, which is adapted to be used for manufacturing a wind turbine blade or a preform element for a wind turbine blade, is positionable on the mold surface. According to the present invention, the mold arrangement furthermore comprises a lifting arrangement with a carrying structure and at least one positioning device arranged thereon, wherein the positioning device comprises at least one gripping device for gripping the preform component and at least one user handling means, wherein the positioning device is movable for bringing the gripping device in contact with the preform component and for bringing the preform component to a designated position on the mold surface, wherein this movement is controllable by a manual operation of a user on the respective user handling means. The mold arrangement is adapted to be used for the method as described above. All features, advantages, and aspects which has been explained with respect to the method according to the present invention can also be applied for the mold arrangement according to the present invention and vice versa.

The mold can consist of wood and/or a plastic material, wherein the geometric shape of the mold surface corresponds to the geometric shape of the preform element or wind turbine blade to be produced.

Preferably, the positioning device can be or can comprise at least one swivel arm with at least one swivel joint which allows for a, particularly horizontal, movement of the gripping device. Having at least two swivel joints with particularly parallel, preferably vertical, swivel axes allows the positioning of the free end of the swivel arm to all positions of the respective, particularly horizontal, plane within the operating range. The actuator for moving the swivel arm can be arranged on or a part of the swivel joint. However, particularly if the swivel arm is movable horizontally, the swivel joint(s) can be freely movable, i.e., without having or being connected with the actuator, such that the horizontal movement is caused by the user completely. This simplifies the respective system and is furthermore typically not challenging for the user, since the horizontal motion does not have to act against the weight or gravitational force of the preform component.

Preferably, the swivel arm comprises a horizontal upper swivel bar and a horizontal lower swivel bar which are arranged about each other. A first joint which provides a first vertical swivel axis connects the carrying structure with a first end of the upper swivel bar. Hence, the first swivel axis is fixed with respect to the carrying structure. The first end of the upper swivel bar constitutes the fixed end of the swivel arm. A second joint which provides a second vertical swivel axis can connect a second end of the upper swivel bar with a first end of the lower swivel bar, wherein the gripping device is arranged on or connected with a second end of the lower swivel bar. The second end of the lower swivel bar constitutes the free end of the swivel arm.

The positioning device can comprise at least one hoisting device which allows for a, particularly vertical, movement of the gripping device. The hoisting device can be arranged on the free end of the swivel arm. The hoisting device can be or can comprise a, particularly extendable, hoisting arm. The hoisting device can be or can comprise a, particularly rewindable, rope on which the gripping device is suspended. An upper end of the hoisting device can be connected with the second end of the lower swivel bar, particularly by a third swivel joint providing a third vertical swivel axis, and a lower end of the hoisting device can be connected with the gripping device.

Regarding the gripping device and it has already been explained, several grippers, e.g., the needle gripper and/or the vacuum gripper and/or the Bernoulli gripper and/or the vortex gripper, can be provided. If more than one gripper is provided, the grippers can be arranged spaced apart from each other and/or within a row. This ensures a solid and reliable attachment of the preform component on the positioning device. The grippers can be arranged along a, preferably straight, latch. The latch can be arranged on the lower end of the hoisting device.

Preferably, the carrying structure is or comprises a horizontal beam having the at least one positioning device arranged thereon. During the positioning of the preform component on the mold surface, the longitudinal direction of the horizontal bar and the longitudinal direction of the mold can be angled, particularly perpendicular, to each other. The carrying structure can comprise an inverted U-shape, wherein the horizontal beam is connected with a vertical beam on each of its ends. The U-shaped carrying structure can span the mold. According to this embodiment, the carrying structure constitutes a gantry crane. More generally, the carrying structure can constitute an overhead crane, particularly a ceiling- or wall-hanging crane, wherein the horizontal bar can movably connected with the ceiling and/or wall of the building.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1-2: perspective views on an embodiment of a mold arrangement according to the present invention, wherein an embodiment of a method according to the present invention is performed with the help of this mold arrangement, and
- Fig. 3-4: possible alternatives for a positioning device of a lifting arrangement of the mold arrangement of figures 1 and 2.

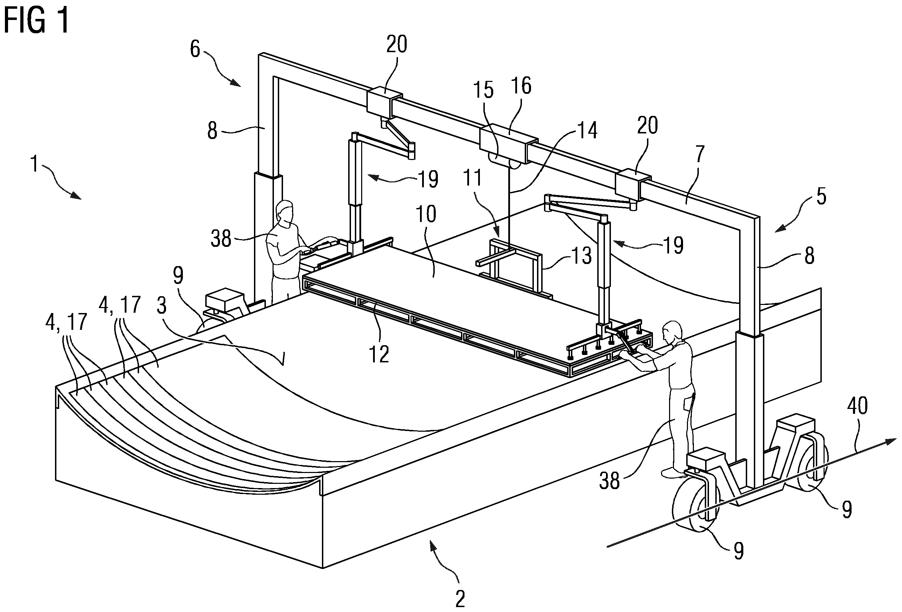

Fig. 1 shows a perspective view on a mold arrangement 1 according to an embodiment of the present invention. The mold arrangement 1 comprises a mold 2 with a mold surface 3, on which preform components 4 are arranged or positioned for manufacturing a wind turbine blade or a preform element for a wind turbine blade. The shape of the mold surface 3 corresponds to the shape of the wind turbine blade or the preform element to be manufactured.

The mold arrangement 1 comprises a lifting arrangement 5 which is used for positioning the preform components 4 on the designated positions on the mold surface 3. The lifting arrangement 5 comprises a carrying structure 6 with a horizontal beam 7 and two vertical beams 8, wherein the beams 7, 8 constitute an inverted U-shape. The lifting arrangement 5 is an overhead crane, more specifically a gantry crane. The carrying structure 6 spans the mold 2. Several relocating means 9 being wheels are arranged on a lower end of each of the vertical beams 8 to allow moving the lifting arrangement 5 on the ground or floor.

Before the preform components 4 are located on the mold surface 3, a stack 10 which consists of several preform components 4 is arranged on a holding structure 11 of the lifting arrangement 5. The holding structure 11 comprises a holding plate 12 on which the stack 10 is arranged, wherein the holding plate 12 is suspended on the horizontal beam 7. The holding structure 11 comprises a yoke 13 on which the holding plate 12 is arranged. The yoke 13 is connected with the horizontal beam 7 by a rewindable rope 14. A lifting means 15 being an electric motor is provided to lift and to lower the holding plate 12 by winding or by unwinding the suspending rope 14. The lifting means 15 and, hence, the holding structure 11 are attached to the horizontal beam 7 by an attaching sleeve 16.

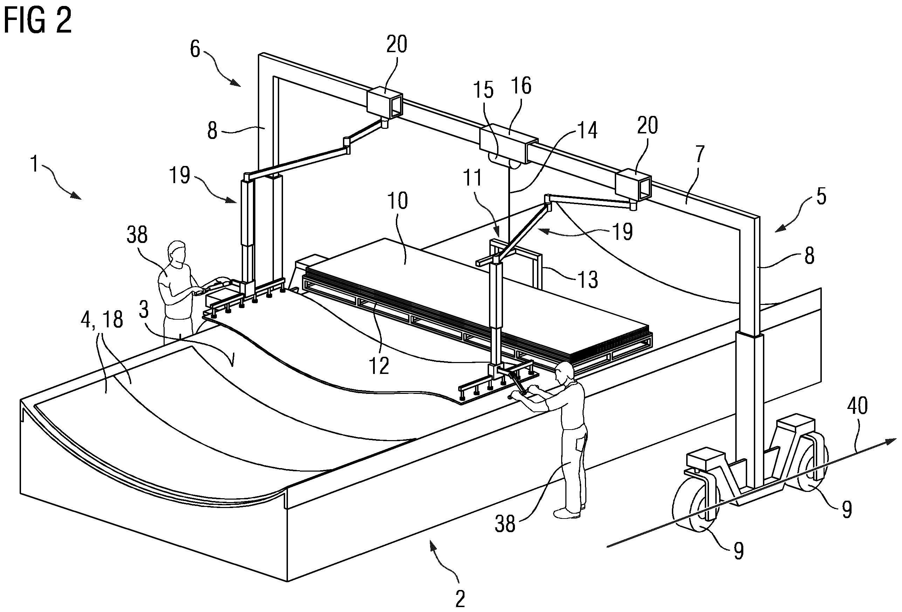

Each of the preform components 4 is strip- or band like and constitutes a layer of the laminated preform element or wind turbine blade to be manufactured. Fig. 1 shows preform components 4 being flexible fiber mats 17 which are impregnated with a heat activatable binding agent like a powder binder. The fibers consist of plastic material and/or carbon. Fig. 2 shows preform components 4 being rigid core components 18 of the preform element or wind turbine blade to be manufactured. The core components 18 consist of a plastic material or balsa wood.

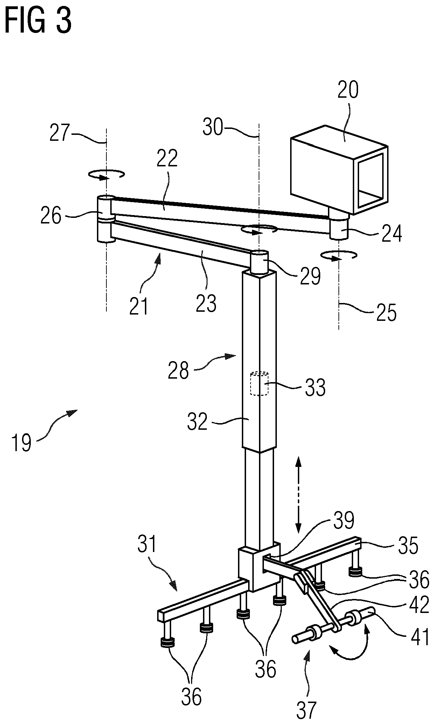

The lifting arrangement 5 comprises two positioning devices 19 which are movable with respect to the carrying structure 6. Fig. 3 shows an enlarged view of one of the positioning devices 19 of the lifting arrangement 5 shown in figures 1 and 2. Each of the positioning devices 19 is connected with the horizontal beam 7 by an attaching sleeve 20. The attaching sleeve 16 of the holding structure 11 is arranged between the attaching sleeves 20 of the positioning devices 19.

As it becomes apparent from fig. 3, each of the positioning devices 19 comprises a swivel arm 21 which allows for a horizontal movement of its free end. The swivel arm 21 comprises a horizontal upper swivel bar 22 and a horizontal lower swivel bar 23, wherein the upper swivel bar 22 is arranged over the lower swivel bar 23. A first swivel joint 24 which provides a first vertical swivel axis 25 connects the horizontal beam 7 or sleeve 20, respectively, with a first end of the upper swivel bar 22 or a fixed end of the swivel arm 21, respectively. A second swivel joint 26 which provides a second vertical swivel axis 27 connects a second end of the upper swivel bar 22 with a first end of the lower swivel bar 23.

Each of the positioning devices 19 comprises a hoisting device 28, wherein an upper end of the hoisting device 28 is connected with a second end of the lower swivel bar 23, namely by a third swivel joint 29 which provides a third vertical swivel axis 30. A lower end of the hoisting device 28 is connected with a gripping device 31. The hoisting device 28 allows for a vertical movement of the gripping device 31.

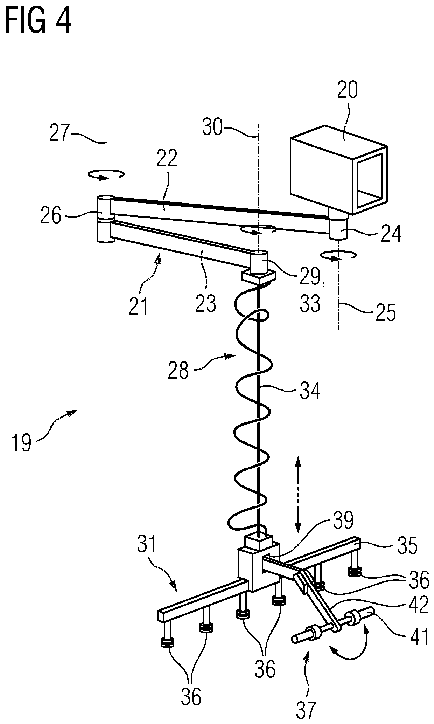

Fig. 3 shows a first possible alternative for the hoisting device 28. The hoisting device 28 is an extendable hoisting arm 32 having an electric motor as an actuator 33 which allows for the vertical movement of the gripping device 31. Fig. 4 shows a second possible alternative for the hoisting device 28. The hoisting device 28 comprises a rewindable rope 34 on which the gripping device 31 is suspended. According to this embodiment, the actuator, which is not explicitly shown in fig. 4, is an electric motor which is arranged in or on the third swivel joint 29 to lift and to lower the gripping device 31 by winding or by unwinding the suspending rope 34.

Regarding the gripping device 31, a horizontal, straight latch 35 which is arranged on the lower end of the hoisting device 28 is provided, wherein several grippers 36 are arranged spaced apart from each other and within a row on the latch 35. The grippers 36 can be needle grippers or vacuum grippers or Bernoulli grippers or vortex grippers or a combination thereof. The gripping device 31 can be used for holding or attaching the preform components 4 to the respective positioning devices 19.

The aim of the method according to the present invention is to position the preform components 4 on the mold surface 3 using the lifting arrangement 5. After the stack 10 has been arranged on the holding structure 11 and the lifting arrangement 5 has been arranged on the mold 2 as it is shown in figures 1 and 2, the positioning devices 19 are moved such that the gripping devices 31 are brought in contact with the upper preform component 4 of the stack 10. Concretely, the gripping devices 31 are brought to different positions on the respective preform component 4, namely to positions on opposed ends of the strip- or band like preform component 4. Next, the respective preform component 4 is gripped by the gripping devices 31, wherein this situation is shown in fig. 1.

For removing the positioning devices 19 independently from each other, each of the positioning devices 19 comprises a user handling means 37 having a handlebar 41 which is adapted to be grasped by hand on both axial ends. The user handling means 37 comprises an extension arm 42, wherein one end of the extension arm is arranged on the latch 35 and the other end of the extension 42 arm is free and carries the handlebar 41. A user 38 can control the movement of the respective positioning device 19 by performing manual operations on the user handling means 37. The swivel joints 24, 26, 29 allow for a free horizontal movement by pushing the user handling means 37 and, hence, positioning devices 19 within the respective direction. Lifting the user handling means 37 up or lowering it down causes a respective force which acts on the user handling means 37 and which is sentenced by a sensor 39, wherein the sensor 39 generates handling signals depending on this force or motion of the user handling means 37. These handling signals are used by a control device of the lifting arrangement 5, which is not explicitly shown in the figures, to generate control signals for the actuator 33 such that lifting or pushing the user handling means 37 up causes a motion of the gripping device 31 upwards and that lowering or pushing the user handling means 37 down causes a motion of the gripping device 31 downwards. Although this is not provided in the present embodiment, respective actuators can be provided for the swivel arm 21 such that, generally spoken, if the user pushes the user handling means 37 into a certain direction, the gripping device 31 follows. In other words, the control signals of the control device are generated such that a direction of the movement of the gripping device 31 caused by the actuator(s) 33 corresponds to the direction of the sentenced force and, hence, to the direction in which the user 28 pushes or pulls the user handling means 37.

Regarding the generation of the control signals, the grippers 36 are equipped with sensing means which are not explicitly shown in the figures. These sensing means provide sensing signals which depend on the forces acting between the grippers 36 and the respective preform component 4. The control signals are generated such that this force does not exceed a force limit.

Next, it is referred to the situation shown in fig. 1 again, where the uppermost preform component 4 of the respective stack 10 is gripped by the gripping devices 31. In the next step, each of the positioning devices 19 is moved such that the preform component 4 being currently held by the gripping devices 31 is brought to a designated position on the mold surface 3. The movement of the positioning devices 19 are controlled by the manual operation of the users 38, as it has been described in the section before. Finally, the preform component 4 is lowered onto the designated position on the mold surface 38 (see fig. 2) and released from the gripping devices 31.

As it has been already mentioned and as it becomes apparent from the figures 1 and 2, several preform components 4 are supposed to be positioned on their respective designated positions on the mold surface 3. For this, the lifting arrangement 5 is moved along a longitudinal extent of the mold 2 which is indicated by an arrow 40 in figures 1 and 2. The preform components 4 are taken subsequently and one by one from the stack 10 and positioned along the longitudinal extent of the mold 2 on the mold surface 3 using the lifting arrangement 5. Referring to the example of fig. 1 and in contrast to the example shown in fig. 2, adjacent preform components 4 overlap each other when being positioned on their respective designated positions.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for positioning at least one preform component (4) on a mold surface (3) of a mold (2), wherein the preform component (4) is adapted to be used for manufacturing a wind turbine blade or a preform element for a wind turbine blade, wherein the method comprises the following steps:
- providing a lifting arrangement (5), comprising a carrying structure (6) and at least one positioning device (19) arranged thereon, wherein the positioning device (19) comprises at least one gripping device (31) and at least one user handling means (37),
- moving the positioning device (19) such that the gripping device (31) is brought in contact with the preform component (4),
- gripping the preform component (4) by the gripping device (31),
- moving the positioning device (19) such that the preform component (4) is brought to a designated position on the mold surface (3), wherein the movement of the positioning device (19) is controlled by a manual operation of a user (38) on the user handling means (37), and
- releasing the preform component (4) from the gripping device (31).

2. Method according to claim 1, **characterized in that** the lifting arrangement (5) comprises a control device which generates control signals for at least one actuator (33) of the positioning device (19), wherein the actuator (33) causes and/or supports the movement of the positioning device (19).

3. Method according to claim 2, **characterized in that** the control device generates the control signals depending on handling signals, wherein at least one sensor (39) is provided which generates the handling signals depending on a force which currently acts on the user handling means (37) and which is caused by the manual operation.

4. Method according to claim 3, **characterized in that** the control signals are generated such that a direction of the movement of the positioning device (19) caused by the actuator (33) corresponds to the direction of the sensed force.

5. Method according to one of the preceding claims, **characterized in that** the lifting arrangement (5) comprises at least two positioning devices (19) being arranged on the carrying structure (6) on positions spaced apart from each other, wherein each of the positioning devices (19) is moved independently from the at least one other positioning device (19) such that the gripping devices (31) are brought to different positions on the preform component (4) for gripping the preform component (4).

6. Method according to claim 5, **characterized in that** the positioning devices (19) are moved such that the gripping devices (31) are brought to positions on opposed ends of the, particularly flexible, preform component (4), wherein the preform component (4) is gripped by the gripping devices (31) on the opposed ends.

7. Method according to one of the preceding claims, **characterized in that** the preform component (4) which is brought to the designated position on the mold surface (3) is strip- or band like and constitutes a layer of the laminated preform element or wind turbine blade.

8. Method according to one of the preceding claims, **characterized in that** several preform components (4) are positioned on the mold surface (3) subsequently and along a longitudinal extent of the mold (2), particularly such that adjacent preform components (4) overlap each other.

9. Method according to claim 8, **characterized in that** the lifting arrangement (5) comprises a holding structure (11), wherein a stack (10) of several, particularly strip- or band like, preform components (4) is arranged on the holding structure (11), wherein the preform components (4) are brought from the holding structure (11) to the designated positions on the mold surface (3) subsequently.

10. Method according to claim 8 or 9, **characterized in that** the lifting arrangement (5) is moved along the longitudinal extent of the mold (2) while the several preform components (4) are positioned on the mold surface (3) subsequently.

11. Mold arrangement, comprising a mold (2) with a mold surface (3), wherein at least one preform component (4), which is adapted to be used for manufacturing a wind turbine blade or a preform element for a wind turbine blade, is positionable on the mold surface (3), wherein the mold arrangement (1) furthermore comprises a lifting arrangement (5) with a carrying structure (6) and at least one positioning device (19) arranged thereon, wherein the positioning device (19) comprises at least one gripping device (31) for gripping the preform component (4) and at least one user handling means (37), wherein the positioning device (19) is movable for bringing the gripping device (31) in contact with the preform component (4) and for bringing the preform component (4) to a designated position on the mold surface (3), wherein this movement is controllable by a manual operation of a user (38) on the respective user handling means (37).

12. Mold arrangement according to claim 11, **characterized in that** the positioning device (19) is or comprises at least one swivel arm (21) with at least one swivel joint (24, 26, 29) which allows for a, particularly horizontal, movement of the gripping device (31).

13. Mold arrangement according to claim 11 or 12, **characterized in that** the positioning device (19) comprises at least one hoisting device (28) which allows for a, particularly vertical, movement of the gripping device (31).

14. Mold arrangement according to one of the claims 11 to 13, **characterized in that** the gripping device (31) is or comprises a needle gripper and/or a vacuum gripper and/or a Bernoulli gripper and/or a vortex gripper, being particularly arranged spaced apart from each other and/or within a row.

15. Mold arrangement according to one of the claims 11 to 14, **characterized in that** the carrying structure (6) is or comprises a horizontal beam (7) having the at least one positioning device (19) arranged thereon, wherein the carrying structure (6) particularly constitutes an overhead crane or a gantry crane.
